# EUROPÄISCHE PATENTANMELDUNG

(11) **EP 1 193 855 A2**
(43) Veröffentlichungstag der Anmeldung: **03.04.2002**
(21) Anmeldenummer: 01122106.6
(22) Anmeldetag: 14.09.2001
(51) Int. Cl.: H02P 7/67

(54) **Leistungsteil zur Ansteuerung eines elektrischen Antriebs sowie Verfahren zur Vernetzung einer Regelungseinheit mit einem oder mehreren Leistungsteilen**

(30) Priorität: 27.09.2000 DE 10047927
(71) Anmelder: SIEMENS AKTIENGESELLSCHAFT, 80333 München (DE)
(72) Erfinder: Heinemann, Gerhard, Dr., 91058 Erlangen (DE); Parsch, Joachim, 90429 Nürnberg (DE); Wagenpfeil, Alexander, 91341 Röttenbach (DE)

(57) **Zusammenfassung**

Durch die Verteilung der Intelligenz eines Antriebs auf eine Regelungseinheit und ein oder mehrere intelligente Leistungsteile unter Verwendung einer hochleistungsfähigen standardisierten seriellen Schnittstelle zur Verbindung dieser Komponenten wird erreicht, dass verschiedene Leistungskomponenten mit ihren Leistungsdaten erkannt und auch diagnostiziert werden können. Weiterhin sind unabhängige Innovationen der Komponenten möglich ohne entsprechende Auswirkungen auf die anderen Komponenten zu haben.

## Beschreibung

Die Erfindung betrifft ein Leistungsteil zur Ansteuerung eines elektrischen Antriebs, eine Antriebsregelung auf Basis eines solchen Leistungsteils und ein Verfahren zur Vernetzung einer Regelungseinheit mit einem oder mehreren solchen Leistungsteilen.

Bei bisher bekannten Antriebsregelungen erfolgt ein Informationsaustausch zwischen der Regelungsintelligenz (z.B. einem Antriebsprozessor) und den passiven Leistungsteilen über eine sogenannte Impulsschnittstelle. Diese Impulsschnittstelle stellt bisher keinen Standard dar und ist zumeist sogar innerhalb der einzelnen Antriebsentwicklungen eines Herstellers nicht frei austauschbar.

Die Aufgabe der Regelung (neben den eigentlichen Regelalgorithmen und der Antriebsfunktionalität) besteht zum einen darin, die Ansteuerimpulse der Leistungsteiltransistoren optimal aufzubereiten. Zu diesem Zweck wird herkömmlich regelungsseitig dem Stromreglerausgang ein Steuersatz nachgeschaltet, der Spannungssollwerte, die üblicherweise als Spannungsbetrag und -Phase oder als Phasenspannungen vorliegen, über ein Puls- oder Abtastdreieck in Wechselrichtersignale umformt (asynchroner Steuersatz) oder aus den Spannungssollwerten synchrone Pulsmuster errechnet (Flankenmodulation, optimierte Pulsmuster).

Auf der Istwertseite werden herkömmlicherweise Stromistwerte als Bürdenspannungen an die Regelbaugruppe übergeben. Die Übernahme der Messwerte, also die Normierung und Verrechnung der hardwarespezifischen Eigenschaften, erfolgt dabei aufwendig auf dem Regelungsprozessor. Für jeden Umrichter sind in der Regelungs-Software spezifische Parameter zu hinterlegen. Da der Leistungsteiltyp teilweise nicht automatisch durch die Software erkannt werden kann, muss häufig der Inbetriebsetzer den Typ von Hand eingeben. Dies bedeutet zusätzlichen Aufwand und dadurch bedingte Kosten. Darüber hinaus besteht dabei die Möglichkeit von Fehleinstellungen.

Aus Kostengründen stellt diese Impulsschnittstelle in den bisherigen Systemen einen Kommunikationsengpass dar. Eine Definition der Schnittstellenbelegung erfolgt dabei weitestgehend aus funktionalen Gesichtspunkten auf Kosten von Diagnoseanforderungen.

Aufgabe der vorliegenden Erfindung ist es daher, eine Anbindung eines Leistungsstellers an eine Regelung im Stromreglertakt zu schaffen, wobei eine standardisierte Kommunikation zwischen den einzelnen Komponenten ermöglicht wird.

Gemäß der vorliegenden Erfindung wird diese Aufgabe durch ein Verfahren zur Vernetzung einer Regelungseinheit mit einem oder mehreren Leistungsteilen mit folgenden Verfahrensschritten gelöst:
- Aufteilung der Rechenleistung einer Antriebsregelung auf eine Regelungselektronik und ein zugeordnetes Leistungsteil,
- Verbindung der Regelungseinheit und jedes Leistungsteils über eine echtzeitfähige digitale Schnittstelle und
- Synchronisierung der Kommunikation zwischen der Regelungseinheit und jedem Leistungsteil durch ein digitales Übertragungsprotokoll.

Dabei hat es sich für die Effektivität als günstig erwiesen, wenn
- in der Regelungseinheit ermittelte digitale Spannungssollwerte über die digitale Schnittstelle an das jeweilige Leistungsteil übergeben werden,
- daraus im jeweiligen Leistungsteil (L1, L2, L3) Ansteuerimpulse für den zu steuernden Motor ermittelt werden,
- im jeweiligen Leistungsteil jeweilige Phasenstromistwerte des zu steuernden Motors erfasst werden und
- diese Phasenstromistwerte der Regelungseinheit von dem jeweiligen Leistungsteil über die digitale Schnittstelle synchron zum Regelungstakt übergeben werden.

Außerdem kann mit dem erfindungsgemäßen Verfahren eine komplette Identifikation der Komponenten durch eine zentrale Regelungsinstanz erreicht werden, indem in einer Initialisierungsphase jedes Leistungsteil der Regelungseinheit über die digitale Schnittstelle einen jeweiligen eindeutigen Kennwert übermittelt, anhand dessen die Regelungseinheit das jeweilige Leistungsteil identifiziert und/oder parametriert.

Wenn die Kommunikation über die digitale Schnittstelle durch bidirektionale serielle Datenübertragung erfolgt, dann kann die Erfindung mit besonders geringem Aufwand realisiert werden.

Die Aufgabe der Erfindung wird überdies durch ein Leistungsteil zur Ansteuerung eines elektrischen Antriebs mit den folgenden Elementen gelöst:
- mit Stromrichterventilen zur Erzeugung von Phasenströmen für einen angeschlossenen elektrischen Antrieb,
- einem Rechenmittel zur Erzeugung von Ansteuersignalen für die Stromrichterventile,
- Mitteln zur Phasenstromistwerterfassung und zur Digitalisierung der erfassten Stromistwerte, wobei eine Digitalisierung insbesondere in dem Rechenmittel erfolgt,
- einer synchronen Schnittstelle zur Übertragung von digitalen Phasenstromistwerten an eine übergeordnete Verarbeitungseinheit und zum Empfang von digitalen Spannungssollwerten zur Erzeugung entsprechender Ansteuersignale in dem Rechenmittel.

Außer dass die synchrone Schnittstelle als bidirektionale serielle Schnittstelle ausgeprägt ist, kann diese zur Realisierung eines größeren Antriebsverbunds, insbesondere zur Kopplung mehrerer Achsen vorteilhafterweise auch als Bussystem ausgeprägt sein.

Es hat sich als günstig erwiesen, wenn die Stromrichterventile als eine Transistorbrücke ausgeprägt sind, insbesondere als Drehstrom-Brückenschaltung, und wenn das Leistungsteil als Umrichter oder Wechselrichter ausgeprägt ist.

Wenn das Leistungsteil ein Identifizierungsmittel umfasst, durch das über die synchrone Schnittstelle ein Kennwert zur eindeutigen Identifizierung des Leistungsteils bereitstellbar ist, so kann eine komplette Identifikation der Leistungskomponenten durch eine zentrale Regelungsinstanz erreicht werden, wobei vorteilhafterweise das Identifizierungsmittel als nicht flüchtiger Speicher ausgeprägt ist, der den eindeutigen Kennwert beinhaltet.

Nach einer weiteren vorteilhaften Ausgestaltung des Leistungsteils nach der Erfindung verfügt dieses über Mittel zur Erfassung von Temperaturistwerten des Leistungsteils und zur Digitalisierung der erfassten Temperaturistwerte, wobei eine Digitalisierung insbesondere in dem Rechenmittel erfolgt. Die synchrone Schnittstelle dient zur Übertragung der digitalen Temperaturistwerte an eine übergeordnete Verarbeitungseinheit.

Nach der Erfindung lässt sich zur Lösung der eingangs gestellten Aufgabe eine Antriebsregelung mit einem voranstehend beschriebenen erfindungsgemäßen Leistungsteil und mit einer Regelungseinheit schaffen, die über die gleiche synchrone Schnittstelle verfügen und darüber miteinander kommunizieren, indem der Regelungseinheit zu Regelungszwecken von dem Leistungsteil digitale Phasenstromistwerte und dem Leistungsteil von der Regelungseinheit digitale Spannungssollwerte im Stromreglertakt vorgebbar sind.

Wenn der Regelungseinheit in einer Initialisierungsphase von jedem Leistungsteil über die digitale Schnittstelle ein jeweiliger eindeutiger Kennwert übermittelbar ist, anhand dessen für die Regelungseinheit das jeweilige Leistungsteil identifizierbar und/oder parametrierbar ist, dann lässt sich innerhalb einer Antriebsregelung auch die gewünschte Identifikation von Leistungsteilen durch die Regelungseinheit erreichen.

Weiter hat es sich als günstig erwiesen, wenn der Regelungseinheit zu Regelungszwecken von dem Leistungsteil digitale Temperaturistwerte des Leistungsteils vorgebbar sind. Dadurch sind die Vorteile der Schnittstelle mit geringem Kostenaufwand für zusätzliche Parameterauswertungen nutzbar.

Die voranstehend beschriebenen Vorteile bei der Lösung der der Erfindung zugrunde liegenden Aufgabe lassen sich vor allem für einen Antriebsverband am besten dadurch erreichen, dass die synchrone Schnittstelle als Kommunikationssystem mit einer Master-Slave-Struktur ausgeprägt ist, in dem die Regelungseinheit ein Master und das Leistungsteil ein Slave ist.

Dadurch lässt sich auf kostengünstige und besonders einfache Weise eine sogenannte "elektronische Welle" mit mehreren Umrichtern bilden, indem eine Regelungseinheit als Master eine Mehrzahl von Leistungsteilen als Slaves über das synchrone Kommunikationssystem synchron mit einem einheitlichen Stromreglertakt ansteuert.

Durch das erfindungsgemäße Konzept einer Dezentralisierung der Intelligenz, d.h. Leistungsteile verlieren Ihren passiven Charakter und bekommen in Form eines Mikroprozessors eigene Intelligenz, lassen sich unter anderem folgende weitere Vorteile erreichen:
- Die Schnittstelle zwischen den Komponenten lässt sich standardisieren;
- die einzelnen Komponenten können unter Beachtung der Schnittstellendefinition getrennt innoviert oder erweitert werden;
- die Anbindung an die unterschiedlichen Leistungsteilanforderungen (z.B. für Werkzeugmaschen und Produktionsmaschinen mit einer Leistung von O,5kW bis ca. 120kW, für Großantriebe und Anlagen mit einer Leistung 50kW bis ca. 10MW) werden ermöglicht;
- Optionsstrukturen werden damit optimal unterstützt;
- da auf der zentralen Regelungsinstanz keine Leistungsteilspezifischen Hardware-Elemente vorhanden sein müssen und die serielle Schnittstelle einen logischen Bus betreiben kann, ist die Anzahl der anschließbaren Leistungsteile flexibel;
- in einer Software der Regelungsbaugruppe müssen keine Listen mit Leistungsteildaten mehr gehalten werden. Dadurch können kundenspezifische Leistungsteile ohne Kompatibilitätsprobleme betrieben werden;
- eine Synchronisierung der Kommunikationsstrecken in Hardware (hinsichtlich von Timing-Verhältnissen, Äquidistanz etc.) und Software (im Hinblick auf Protokollinhalte) ist gegeben und ermöglicht beispielsweise
- interpolierende Achsen mit vergleichbarer Dynamik bis in den Stromreglerbereich (Beschleunigungssymmetrie);
- eine Realisierung einer "elektronische Welle" durch Synchronisierung von mehreren Umrichtern und
- eine Parallelschaltung von Leistungsteilen mit vergleichbarer Dynamik der einzelnen Aktoren.

Weitere Vorteile und Details der vorliegenden Erfindung ergeben sich anhand der folgenden Beschreibung eines vorteilhaften Ausführungsbeispiels und in Verbindung mit den Figuren. Dabei sind Elemente mit gleicher Funktionalität mit den gleichen Bezugszeichen gekennzeichnet. Es zeigt:
- FIG 1: ein Beispiel einer Topologie mit Regelungseinheit und mehreren Leistungsteilen durch Vernetzung nach der Erfindung und
- FIG 2: ein Blockschaltbild einer Antriebsregelung nach der Erfindung mit einem erfindungsgemäßen Leistungsteil.

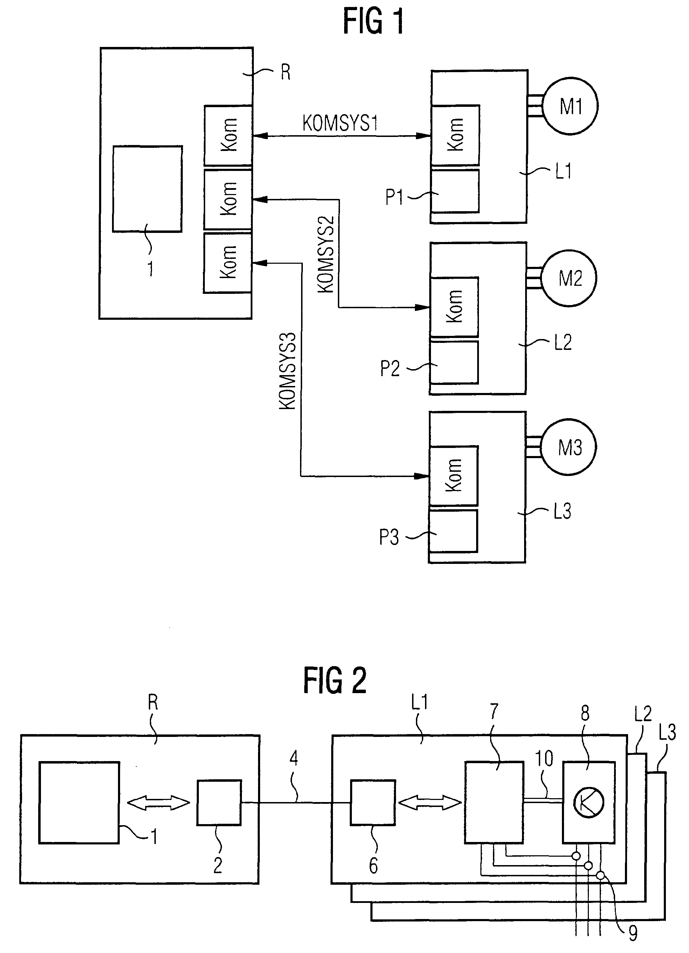

Die Darstellung nach FIG 1 zeigt anhand einer Antriebsregelung für drei Motoren M1 bis M3 ein Kommunikationsnetzwerk mit drei unterschiedlichen Kommunikationssystemen KOMSYS1, KOMSYS2 und KOMSYS3, über das die den Motoren zugeordneten Leistungsteile L1 bis L3 mit einer übergeordneten Regelungseinheit R kommunizieren. Bei der gezeigten Anordnung kann es sich beispielsweise um drei gekoppelte Antriebe einer industriellen Bearbeitungsmaschine handeln, etwa um eine Werkzeugmaschine oder einen Roboter.

Nach der Erfindung wird durch die Verwendung eines hochleistungsfähigen synchronen Übertragungssystems KOMSYS1 bis KOMSYS3 eine teilweise Verlagerung der Rechenkapazität aus der Regelungseinheit R in die Leistungsteile L1 bis L3 möglich. Die Regelungseinheit beinhaltet dazu einen Regelungsprozessor 1, den jeweiligen Leistungsteilen L1 bis L3 sind zusätzlich jeweilige Mikroprozessoren oder Mikrocontroller P1 bis P3 zugeordnet.

Jeder Teilnehmer in diesem Netzwerk, sei es die Regelungseinheit R oder ein Leistungsteil L1 bis L3, verfügt über jeweilige Kommunikationsbausteine Kom, über die diese Teilnehmer verbunden sind. Dabei kann es sich auch um eine Busstruktur handeln, über die die Kommunikation erfolgt.

Indem ein Kommunikationsteilnehmer zwei oder mehrere solcher Kommunikationsbausteine Kom aufweist (hier die Regelungseinheit R), lässt sich eine Vernetzung zwischen mehreren Komponenten erreichen. Die Kommunikationsstrecke kann dadurch an weitere Teilnehmer weitergeführt werden. Die Kommunikationsbausteine Kom arbeiten das digitale Übertragungsprotokoll ab und ermöglichen so eine bidirektionale Kommunikation, womit die Versorgung der Regelungseinheit R mit den notwendigen Phasenstromistwerten im Stromreglertakt einerseits und die Versorgung der Leistungsteile L1 bis L3 mit Spannungssollwerten andererseits ebenfalls im Regelungstakt möglich wird.

Ein Beispiel für ein solches geeignetes echtzeitfähiges synchrones Übertragungssystem stellt ein Kommunikationsnetzwerk auf Basis einer Ethernet-Physik dar, welches über ein geeignetes digitales Übertragungsprotokoll zu einem deterministischen Übertragungssystem ertüchtigt wird.

Da es bei der in FIG 1 gezeigten Anwendung sowohl auf eine hochgenaue Einhaltung der Echtzeitbedingung als auch auf eine hohe Sicherheit der Übertragung ankommt, wird die genormte Übertragungsschicht 2 (Telegrammrahmen und Zugriffsverfahren) des (Fast)-Ethernet, die diese Anforderungen nicht erfüllt, durch ein neues Daten-Protokoll und eine neue Zugriffsteuerung vollständig neu definiert und damit die Ethernet-Physik als Basis für eine Echtzeitkommunikation zwischen beispielsweise Antriebskomponenten genutzt. Damit kann die Kommunikation zwischen der Regelungseinheit R und den Leistungsteilen L1 bis L3 realisiert werden.

Bezüglich einer Synchronisation zwischen einem Master, z.B. der Regelungseinheit R, und Slaveeinheiten, z.B. den erfindungsgemäßen Leistungsteilen L1 bis L3, erweist es sich als vorteilhaft, wenn eine Synchronisierung der Slaveeinheiten auf die Mastereinheit erfolgt, indem jede Slaveeinheit über einen jeweiligen Zeitzähler mit einer vorgegebenen Gesamtzykluszeit getaktet wird, der zyklisch durch den Empfang einer jeweiligen von der Mastereinheit bestimmten Slave-spezifischen Synchronisationsinformation gesetzt wird.

Es kommt somit eine Master-Slave-Kommunikationsarchitektur zum Einsatz. Um einen zyklischen Datenaustausch mit gleichen Abtastzeitpunkten realisieren zu können, wird eine gemeinsame Zeitbasis für den Master und alle Slaves hergestellt. Die Synchronisierung der Slaves auf den Master erfolgt durch speziell ausgezeichnete, zeitlich definierten Telegramme des Masters an die Slaves und individuell parametrierte Zeitzähler in den Slaves.

Dabei können Nutzdatentelegramme und spezielle Synchronisationstelegramme, die die jeweiligen Synchronisationsinformationen beinhalten, übertragen werden. Alternativ kann die Synchronisationsinformation auch in ein ausgezeichnetes Nutzdatentelegramm integriert sein.

Dabei lässt sich die Stabilität des Kommunikationssystems weiter steigern, wenn jeder Zeitzähler einer Slaveeinheit auch bei Ausbleiben der jeweiligen Synchronisationsinformation nach Ablauf der vorgegebenen Gesamtzykluszeit selbsttätig einen neuen Zyklus startet.

Für den Sende- und Empfangsbetrieb bei der zyklischen Datenübertragung kommt beispielsweise ein Zeitschlitz-Zugriffsverfahren zum Einsatz, das vom Master im Netzwerk initialisiert wird und eine totzeit-optimale Datenübertragung erlaubt. Dadurch können die Telegramme bzgl. gestörter, verfrühter oder verspäteter Übertragung präzise überwacht werden.

Dazu besitzt zur Initialisierung ausschließlich die Mastereinheit Sendeberechtigung auf der Kommunikationsstrecke und teilt jeder Slaveeinheit, die ausschließlich Antwortberechtigung besitzt, über ein entsprechendes Slave-spezifisches Telegramm neben der Gesamtzykluszeit mit, in welchen Zeitschlitzen innerhalb der Gesamtzykluszeit die jeweilige Slaveeinheit welche Telegramme von der Mastereinheit empfangen wird und in welchen Zeitschlitzen sie ihre Telegramme senden soll.

Dabei hat es sich als vorteilhaft erwiesen, wenn jeder Slaveeinheit in der Initialisierungsphase der jeweilige Synchronisationszeitpünkt mitgeteilt wird.

Wenn in jeder Slaveeinheit, eben dem jeweiligen Leistungsteil L1 bis L3, zu einem gemeinsamen Zeitpunkt, insbesondere zu einem Zyklusbeginn, jeweilige Augenblickswerte (z.B. Phasenstromistwerte eines angeschlossenen Motors M1 bis M3 etc.) gespeichert werden, lässt sich eine gleichzeitige und äquidistante Abtastung für die Regelungseinheit R erreichen.

Außerdem lassen sich in jedem von der Mastereinheit an eine Slaveeinheit übermittelten Telegramm Kontrollinformationen vorsehen, mit denen sich direkt in der Slaveeinheit vorgesehene sicherheitsgerichtete Funktionen aktivieren lassen.

Die Nutzdaten können in einem Telegrammrahmen transportiert werden, der neben der Slave-Adressierung und Telegrammlängeninformation die Absicherung der Datenintegrität mittels beispielsweise einer CRC-Prüfsumme und weitere sicherheitsrelevante Datenbereiche zur Verfügung stellt. Die Daten im Telegrammrahmen können nicht nur von einem Applikationsprozessor, sondern auch von einem Kommunikationsbaustein KOM ausgewertet werden.

Dazu sendet jede Slaveeinheit mit jedem Telegramm ein Signal an die Mastereinheit aus. Die Mastereinheit setzt dann bei Ausbleiben dieses Signals die entsprechende Slaveeinheit kontrolliert still.

Obwohl die zur Anwendung kommende Übertragungstechnik nach dem Ethernet-Standard prinzipiell nur Punkt-zu-Punkt-Verbindungen erlaubt, kann wie bei (Fast) Ethernet Netzen auch durch die Verwendung von Netzknoten (sogenannte HUBs) die Bildung von Netzwerken ermöglicht werden, indem mehrere oder jeder Kommunikationsteilnehmer über einen Schaltungsteil zur Bildung von Netzknoten verfügt, der zur Weiterleitung der Telegramme in Richtung einer anderen Mastereinheit oder weiterer Slaveeinheiten dient, wobei eine Kommunikation zwischen Kommunikationsteilnehmern über Netzknoten ebenfalls nach der vorangehend beschriebenen Vorgehensweise erfolgt.

Mit Hilfe der im vorangehenden beschriebenen Vorgehensweise lässt sich auf Basis eines Kommunikationssystems mit Ethernet-Physik eine Echtzeitkommunikation erreichen. Dabei können auch hierarchische Netzwerke mit über Netzknoten verbundenen Punkt-zu-Punkt-Verbindungen mit Ethernet-Physik zur Durchführung einer Echtzeitkommunikation in größeren Netztopologien erstellt werden.

Dieses eignet sich auch zur Vernetzung bzw. Kopplung eines verteilten Antriebssystems, indem eine Regelungseinheit R als Mastereinheit eines Kommunikationssystems KOMSYS1, KOMSYS2 oder KOMSYS3 dient, welches ein zugeordnetes Leistungsteil L1 bis L3 als Slaveeinheit aufweist.

Indem die Kommunikation zwischen den Antriebskomponenten wie Regelungseinheit R und Leistungsteilen L1 bis L3, aber auch weiteren Komponenten wie Gebersystemen und Bewegungssteuerungen durch ein vorhandenes Hochleistungs-Übertragungssystem aus der Bürokommunikation mittels vollständig neuem Protokoll, Master-Slave-Synchronisation und Zeitschlitz-Zugriffsverfahren zur Echtzeitfähigkeit ertüchtigt werden, lassen sich auch sehr zeitkritische Anwendungen mit einem hohen Regelungstakt realisieren.

Selbstverständlich lassen sich zur Realisierung der erfindungsgemäßen Leistungsteile L1 bis L3 und deren Vernetzung mit einer Regelungseinheit R auch andere Kommunikationsnetzwerke als das vorangehend beispielhaft beschriebene verwenden, vorausgesetzt, dass die Bandbreite der Übertragung die Kommunikation im Stromregelungstakt gewährleistet.

Die Darstellung nach FIG 2 zeigt den Aufbau eines erfindungsgemäßen Leistungsteils L und dessen Kommunikation mit einer Regelungseinheit R anhand eines Blockschaltbilds. Die Regelungseinheit R besitzt den bekannten Aufbau und verfügt über einen Regelungsprozessor bzw. Antriebsprozessor 1. Dieser gibt oder empfängt seine Daten unter anderem über einen Kommunikationsbaustein Kom bzw. 2, der als Treiberbaustein der Regelungseinheit R fungiert und auf dem das digitale Übertragungsprotokoll abgearbeitet wird. Dabei kann es sich beispielsweise um das vorangehend beschriebene Übertragungsprotokoll auf Basis einer Ethernet-Physik handeln.

Weiter ist exemplarisch ein Leistungsteil L1 von den drei Leistungsteilen L1 bis L3 aus FIG 1 gezeigt. Dieses Leistungsteil verfügt erfindungsgemäß ebenfalls über einen Mikroprozessor 7 bzw. P1, der vorteilhaft als Mikrocontroller ausgeprägt ist (somit Schnittstellen und eventuell einen Analog-Digital-Wandler beinhaltet). Dieser Mikrocontroller 7 greift ebenfalls auf einen Kommunikationsbaustein Kom bzw. 6 zu, der dem der Regelungseinheit entspricht. Beide Kommunikationsbausteine bzw. Treiberbausteine sind über eine Kommunikationsstrecke 4, z.B. das in FIG 1 gezeigte Kommunikationssystem KOMSYS1, miteinander verbunden. Die Kommunikation erfolgt mittels des digitalen Übertragungsprotokolls über die beiden Treiberbausteine 2 und 6.

Digitale Spannungssollwerte werden über die beispielsweise serielle Schnittstelle 2, 4, 6 an das Leistungsteil L1 übergeben, in welchem mittels des Mikrocontrollers 7 Ansteuerimpulse 10 auf den vorliegenden Leistungsteil-Typ optimiert errechnet werden. Der Mikrocontroller 7 generiert somit speziell für das Leistungsteil optimierte Ansteuersignale 10 für Stromrichterventile 8, etwa eine 6-phasige Transistorbrücke.

Daraus ergeben sich unter anderem folgende weitere Vorteile:
- Anpassungen an neue Transistortechnologien (Bauteile, second sources, Totzeiten) sind minimierbar und ohne Rückwirkung zur Regelung möglich;
- es lassen sich Parallelschaltungen durch Vervielfachung der Ansteuerlogik erreichen;
- komplexe Ansteuerverfahren sind leichter einzubringen, z.B. ein selbständiges Weiterdrehen des Spannungs-Raumzeigers bei Kenntnis der Amplitude, des Startwinkels und zusätzlich einer aus der Drehzahl abgeleiteten elektrischen Drehgeschwindigkeit. Damit fällt der Druck auf unrealistische kleine Stromreglertakte in Verbindung mit hochdrehenden Motoren geringer aus;
- die Ansteuerlogik ist unabhängig vom angeschlossenen Leistungsteil mit neuer Software ladbar.

Das erfindungsgemäße Leistungsteil L1 verfügt des weiteren über eine Stromistwerterfassung 9. Die so ermittelten Phasenstromistwerte werden zum Mikrocontroller 7 geführt und dort - z.B. durch den integrierten Analog-Digital-Wandler digitalisiert. Das gleiche lässt sich für eine (nicht gezeigte) Temperaturistwerterfassung realisieren.

Die digitalen Phasenstromistwerte des angeschlossenen Motors und auch eventuell ermittelte Temperaturistwerte des Leistungsteils werden vom Mikrocontroller 7 über die beispielsweise serielle Schnittstelle 6, 4, 2 an die Regelungseinheit R übergeben.

Damit lassen sich folgende weitere Vorteile erzielen:
- Messverfahren lassen sich ohne Rückwirkung zum Regelungsalgorithmus ändern;
- eine Übernahme und Umrechnung der Messwerte in Abhängigkeit der Hardware-Realisierung erfolgt vor Ort in dem Leistungsteil;
- mittels des Mikrocontrollers 7 lassen sich zusätzlich Standard-Überwachungen durchführen;
- eine Übertragung detaillierter Status-Informationen wird möglich;
- durch die dezentrale Intelligenz ist eine totzeit-minimale Zulieferung der Istwerte zum Regelalgorithmus der Regeleinheit R möglich;

Wie bereits erwähnt, können auch Temperaturmesswerte der Leistungsteilbaugruppe L1 über die serielle Schnittstelle an die Regelung R übergeben werden. Damit lassen sich weitere Vorteile erzielen:
- Kennungen über den Typ des Messwertes (z.B. Temperaturmesswert von IGBT-Stromventil, Lüfter oder Umgebungsluft) können mitgeliefert werden;
- die Regelung R braucht keine Informationen über den Sensortyp (z.B. PT100, KTY84) haben;
- falls keine Temperaturmesswerte vorliegen, können die Temperaturen über Modelle ermittelt werden. Die Kennwerte eines Modell-Algorithmus werden auf dem Leistungsteil gespeichert und entweder der Regelung zur Berechnung der Algorithmen zur Verfügung gestellt oder direkt auf dem Leistungsteil zur Berechnung herangezogen;
- auch hier lassen sich Standard-Überwachungen berechnen und detaillierte Status-Informationen übertragen;
- eine Berechnung komplexerer Überwachungsalgorithmen, z.B. I2t der Transistoren, wird ermöglicht.

Die Intelligenz in Form des Mikrocontrollers 7 im Leistungsteil L1 kann weiterhin für ein neues Diagnosekonzept genutzt werden. Damit wird ein entscheidender Schritt in Richtung Zuordenbarkeit der Fehlerursachen (Selektivität) und damit zur Verringerung der Anzahl oder des Aufwandes eventueller Service-Einsätze erreicht.

Bezüglich der Identifizierung wird im Leistungsteil L1 beispielsweise ein nicht-flüchtiger Speicher vorgesehen, der neben den Programmen eines Leistungsteilcontrollers alle wesentlichen Daten (typische Werte einer Leistungsteilklasse oder baugruppenspezifische Vermessung der Kenngrößen, Seriennummer) für die Anmeldung des Leistungsteils L1 bei dem Regelungsprozessor 1 vorhält. In diesem Speicher können auch Fehler- und Diagnosedaten abgelegt werden, die zu einer verbesserten und vereinfachten Erfassung von Rückwaren führen.

Die Verteilung der Intelligenz eines Antriebs auf eine Regelungseinheit R und ein oder mehrere intelligente Leistungsteile L1 bis L3 unter Verwendung einer hochleistungsfähigen standardisierten seriellen Schnittstelle 2, 4, 6 zur Verbindung dieser Komponenten wird erreicht, dass die Komponenten mit ihren Leistungsdaten erkannt und auch diagnostiziert werden können. Weiterhin sind unabhängige Innovationen der Komponenten möglich ohne entsprechende Auswirkungen auf die anderen Komponenten zu haben.

## Patentansprüche

1. Verfahren zur Vernetzung einer Regelungseinheit (R) mit einem oder mehreren Leistungsteilen (L1, L2, L3) mit folgenden Verfahrensschritten:
- Aufteilung der Rechenleistung einer Antriebsregelung auf eine Regelungselektronik und ein zugeordnetes Leistungsteil (L1, L2, L3),
- Verbindung der Regelungseinheit (R) und jedes Leistungsteils (L1, L2, L3) über eine echtzeitfähige digitale Schnittstelle (KOMSYS1, KOMSYS2, KOMSYS3) und
- Synchronisierung der Kommunikation (KOMSYS1, KOMSYS2, KOMSYS3) zwischen der Regelungseinheit (R) und jedem Leistungsteil (L1, L2, L3) durch ein digitales Übertragungsprotokoll (Kom).

2. Verfahren zur Vernetzung einer Regelungseinheit (R) mit einem oder mehreren Leistungsteilen (L1, L2, L3) nach Anspruch 1, wobei
- in der Regelungseinheit (R) ermittelte digitale Spannungssollwerte über die digitale Schnittstelle (KOMSYS1, KOMSYS2, KOMSYS3) an das jeweilige Leistungsteil (L1, L2, L3) übergeben werden,
- daraus im jeweiligen Leistungsteil (L1, L2, L3) Ansteuerimpulse (10) für den zu steuernden Motor (M1, M2, M3) ermittelt werden,
- im jeweiligen Leistungsteil (L1, L2, L3) jeweilige Phasenstromistwerte (9) des zu steuernden Motors (M1, M2, M3) erfasst werden und
- diese Phasenstromistwerte (9) der Regelungseinheit (R) von dem jeweiligen Leistungsteil (L1, L2, L3) über die digitale Schnittstelle (KOMSYS1, KOMSYS2, KOMSYS3) synchron zum Regelungstakt übergeben werden.

3. Verfahren zur Vernetzung einer Regelungseinheit (R) mit einem oder mehreren Leistungsteilen (L1, L2, L3) nach Anspruch 1 oder 2, wobei in einer Initialisierungsphase jedes Leistungsteil (L1, L2, L3) der Regelungseinheit (R) über die digitale Schnittstelle (KOMSYS1, KOMSYS2, KOMSYS3) einen jeweiligen eindeutigen Kennwert übermittelt, anhand dessen die Regelungseinheit das jeweilige Leistungsteil (L1, L2, L3) identifiziert und/oder parametriert.

4. Verfahren zur Vernetzung einer Regelungseinheit (R) mit einem oder mehreren Leistungsteilen (L1, L2, L3) nach Anspruch 1, 2 oder 3, wobei die Kommunikation über die digitale Schnittstelle (KOMSYS1, KOMSYS2, KOMSYS3) durch bidirektionale serielle Datenübertragung erfolgt.

5. Leistungsteil (L1, L2, L3) zur Ansteuerung eines elektrischen Antriebs (M1, M2, M3) mit
- Stromrichterventilen (8) zur Erzeugung von Phasenströmen für einen angeschlossenen elektrischen Antrieb,
- einem Rechenmittel (7) zur Erzeugung von Ansteuersignalen (10) für die Stromrichterventile (8),
- Mitteln zur Phasenstromistwerterfassung (9) und zur Digitalisierung der erfassten Stromistwerte, wobei eine Digitalisierung insbesondere in dem Rechenmittel (7) erfolgt,
- einer synchronen Schnittstelle (Kom, 6) zur Übertragung von digitalen Phasenstromistwerten an eine übergeordnete Verarbeitungseinheit (R) und zum Empfang von digitalen Spannungssollwerten zur Erzeugung entsprechender Ansteuersignale (10) in dem Rechenmittel (7).

6. Leistungsteil zur Ansteuerung eines elektrischen Antriebs nach Anspruch 5, wobei die synchrone Schnittstelle (Kom, 6) als bidirektionale serielle Schnittstelle ausgeprägt ist.

7. Leistungsteil zur Ansteuerung eines.elektrischen Antriebs nach Anspruch 5 oder 6, wobei die synchrone Schnittstelle als Bussystem (4, KOMSYS1, KOMSYS2) ausgeprägt ist.

8. Leistungsteil zur Ansteuerung eines elektrischen Antriebs nach einem der Ansprüche 5 bis 7, wobei die Stromrichterventile (8) als eine Transistorbrücke ausgeprägt sind, insbesondere als Drehstrom-Brückenschaltung.

9. Leistungsteil zur Ansteuerung eines elektrischen Antriebs nach einem der Ansprüche 5 bis 8, wobei dieses als Umrichter oder als Wechselrichter ausgeprägt ist.

10. Leistungsteil zur Ansteuerung eines elektrischen Antriebs nach einem der Ansprüche 5 bis 9, wobei das Leistungsteil (L1, L2, L3) ein Identifizierungsmittel umfasst, durch das über die synchrone Schnittstelle (Kom, 6) ein Kennwert zur eindeutigen Identifizierung des Leistungsteils (L1, L2, L3) bereitstellbar ist.

11. Leistungsteil zur Ansteuerung eines elektrischen Antriebs nach Anspruch 10, wobei das Identifizierungsmittel als nicht flüchtiger Speicher ausgeprägt ist, der den eindeutigen Kennwert beinhaltet.

12. Leistungsteil zur Ansteuerung eines elektrischen Antriebs nach einem der Ansprüche 5 bis 11, mit Mitteln zur Erfassung von Temperaturistwerten des Leistungsteils (L1, L2, L3) und zur Digitalisierung der erfassten Temperaturistwerte, wobei eine Digitalisierung insbesondere in dem Rechenmittel (7) erfolgt, wobei die synchrone Schnittstelle (Kom, 6) zur Übertragung der digitalen Temperaturistwerte an eine übergeordnete Verarbeitungseinheit (R) dient.

13. Antriebsregelung mit einem Leistungsteil (L1, L2, L3) nach einem der vorangehenden Ansprüche 5 bis 12 und mit einer Regelungseinheit (R), die über die gleiche synchrone Schnittstelle (Kom, 2, 4, 6) verfügen und darüber miteinander kommunizieren, indem der Regelungseinheit (R) zu Regelungszwecken von dem Leistungsteil (L1, L2, L3) digitale Phasenstromistwerte und dem Leistungsteil (L1, L2, L3) von der Regelungseinheit (R) digitale Spannungssollwerte im Stromreglertakt vorgebbar sind.

14. Antriebsregelung nach Anspruch 13, mit einem Leistungsteil nach Anspruch 10 oder 11, wobei der Regelungseinheit (R) in einer Initialisierungsphase von jedem Leistungsteil (L1, L2, L3) über die digitale Schnittstelle (KOMSYS1, KOMSYS2, KOMSYS3) ein jeweiliger eindeutiger Kennwert übermittelbar ist, anhand dessen für die Regelungseinheit (R) das jeweilige Leistungsteil (L1, L2, L3) identifizierbar und/oder parametrierbar ist.

15. Antriebsregelung nach Anspruch 13, mit einem Leistungsteil nach Anspruch 12, wobei der Regelungseinheit (R) zu Regelungszwecken von dem Leistungsteil (L1, L2, L3) digitale Temperaturistwerte des Leistungsteils vorgebbar sind.

16. Antriebsregelung nach Anspruch 13, 14 oder 15, wobei die synchrone Schnittstelle als Kommunikationssystem (4, KOMSYS1, KOMSYS2, KOMSYS3) mit einer Master-Slave-Struktur ausgeprägt ist, in dem die Regelungseinheit (R) ein Master und das Leistungsteil (L1, L2, L3) ein Slave ist.

17. Antriebsregelung nach Anspruch 16, wobei eine Regelungseinheit (R) als Master eine Mehrzahl von Leistungsteilen (L1, L2, L3) als Slaves über das synchrone Kommunikationssystem (4, KOMSYS1, KOMSYS2, KOMSYS3) synchron mit einem einheitlichen Stromreglertakt ansteuert.
